# FASCICULE DE BREVET EUROPEEN

(11) **EP 2 910 297 B1**
(45) Date de publication et mention de la délivrance du brevet: **03.04.2019**
(21) Numéro de dépôt: 15305259.2
(22) Date de dépôt: 20.02.2015
(51) Int. Cl.: B01D 53/75, B01D 53/78

(54) **Installation pour le traitement d'un effluent gazeux**
Anlage zur Aufbereitung eines Abgases
Facility for treating a gaseous effluent

(30) Priorité: 21.02.2014 FR 1451392
(43) Date de publication de la demande: 26.08.2015
(73) Titulaire: TC'Plastic, 44160 Pontchateau (FR)
(72) Inventeur: Rouxel, Franck, 56350 ALLAIRE (FR)
(74) Mandataire: Jacobacci Coralis Harle

(56) Documents cités:
- EP-A1- 0 742 039
- FR-A1- 2 442 072
- US-A1- 2012 159 927

## Description

### DOMAINE TECHNIQUE AUQUEL SE RAPPORTE L'INVENTION

La présente invention concerne une installation pour le traitement d'un effluent gazeux, adaptée en particulier pour les traitements de dépollution olfactive.

### ARRIERE-PLAN TECHNOLOGIQUE

Certaines activités industrielles génèrent des effluents gazeux qui doivent être traités avant leur libération dans l'environnement.

C'est en particulier le cas dans les domaines du compostage, des stations d'épuration, du traitement des ordures ménagères ou de l'équarrissage.

Dans ces activités, l'effluent gazeux contient également tout un ensemble de molécules polluantes, dont certaines au moins constituent une source de pollution du type olfactive.

En pratique, il est préférable de traiter chaque famille de polluant chimique par une opération dédiée, par exemple au moyen de procédés dits « en phase liquide » (phénomènes d'absorption dans un liquide) ou de procédés dits « sec » (phénomènes d'adsorption sur un support).

Pour cela, les sites industriels concernés sont classiquement équipés d'une installation pour le traitement de ces effluents gazeux.

En particulier, les procédés de traitement en phase liquide sont mis en oeuvre au moyen d'une enceinte de traitement dédiée, désignée couramment sous le nom de « laveur ».

Une telle installation de traitement est, comme tout dispositif, sujette à des arrêts de fonctionnement du fait notamment de défaillance(s) et/ou d'opérations de maintenance.

Pour assurer une continuité et une sécurité de traitement, il est alors habituel d'implanter plusieurs enceintes de traitement en parallèle.

Selon une première approche, une ou plusieurs de ces enceintes de traitement ne sont pas utilisées en routine et servent à remplacer une enceinte de traitement à l'arrêt.

Selon une seconde approche, il est aussi possible d'envisager la présence d'une pluralité d'enceintes de traitement qui fonctionnent toute en routine et qui assurent chacune le traitement d'une partie de l'effluent gazeux. Le dysfonctionnement de l'une de ces enceintes permet une poursuite des activités dans une configuration « dégradée » au moyen de la ou des enceintes toujours opérationnelles.

Selon le document FR-2 442 072, il est également connu une unité d'épuration et d'adsorption de gaz polluants ou autres, composée d'une cuve disposée sur un plan horizontal, contenant un liquide propre à l'épuration des gaz.

Les gaz sont admis dans l'unité d'épuration par une entrée médiane d'une paroi verticale de la cuve et décrivent un circuit double et symétrique par un cheminement au travers de deux couloirs horizontaux séparés par une cloison verticale.

Seule une portion des couloirs est agencée au niveau de cette cloison séparative et séparée par cette dernière. Les autres portions de couloir se situent à distance de la cloison séparative.

Cependant, ces solutions ne sont pas satisfaisantes en raison notamment des surcoûts qu'elles entraînent et de l'encombrement au sol qu'elles génèrent.

Il existe par conséquent un besoin de pouvoir assurer une continuité et une sécurité de traitement, sans conduire à une multiplication des enceintes de traitement qui constitue une approche onéreuse et encombrante.

### OBJET DE L'INVENTION

Dans ce cadre, le demandeur propose une nouvelle installation pour le traitement des effluents gazeux, généré par une activité industrielle, offrant, intrinsèquement, une telle sécurisation et continuité de traitement des effluents gazeux.

Pour cela, l'installation correspondante comprend :
(i) au moins une enceinte de traitement délimitant un volume interne comportant - des moyens pour le traitement de l'effluent gazeux, lors de sa circulation au sein de ce volume interne, - au moins une ouverture amont, pour l'entrée de l'effluent gazeux à traiter, et - au moins une ouverture aval, pour la sortie de l'effluent gazeux traité, et
(ii) des moyens pour générer une circulation dudit effluent gazeux, depuis ladite ouverture amont jusqu'à ladite ouverture aval dudit volume interne,
   laquelle enceinte a une forme générale de fût cylindrique présentant un axe longitudinal.
   lesquels moyens de traitement sont composés d'étages de traitement qui sont implantés en série, pour permettre une circulation de la partie d'effluent gazeux successivement au sein de chacun desdits étages de traitement, lesquels étages de traitement comportent chacun des moyens pour appliquer un traitement particulier à ladite partie d'effluent gazeux,
   caractérisée en ce que ledit volume interne de ladite enceinte comprend deux chambres de traitement identiques l'une par rapport à l'autre,
   en ce que les chambres de traitement sont séparées par une cloison séparative longitudinale qui s'étend diamétralement et verticalement le long dudit axe longitudinal,
   laquelle enceinte de traitement comporte une paroi périphérique qui délimite un volume interne,
   laquelle paroi périphérique se compose d'une cloison cylindrique tubulaire qui est terminée par deux cloisons d'extrémités, l'une amont et l'autre aval,
   en ce que chaque chambre de traitement a une forme générale de demi-cylindre, délimitée par la cloison séparative, par une moitié des deux cloisons d'extrémités et par une moitié de la cloison cylindrique tubulaire,
   en ce que les deux chambres de traitement sont agencées en parallèle l'une de l'autre, de part et d'autre de la cloison séparative longitudinale,
   en ce que lesdites deux chambres de traitement sont équipées chacune desdits moyens de traitement, qui sont agencées en parallèle et dans chacune desquelles une partie dudit effluent gazeux est destinée à cheminer pour son traitement,
   en ce que chaque chambre de traitement comprend des moyens de traitement composés d'étages de traitement qui sont implantés en série sur la longueur de l'axe longitudinal de ladite chambre de traitement et sur la longueur de la cloison séparative longitudinale,
   en ce que l'enceinte comporte au moins deux paires d'étages de traitement qui sont réparties en série sur la longueur de la cloison séparative, et
   en ce que, dans chacune desdites paires d'étages de traitement, les deux étages de traitement sont identiques l'un par rapport à l'autre, sont disposés de part et d'autre de la cloison séparative et sont séparés par ladite cloison séparative.

Une telle structure a l'intérêt d'apporter une solution particulièrement simple, efficace et compacte, en particulier pour la sécurisation et la continuité du traitement.

Selon le site que l'on souhaite équiper, il peut être prévu de dimensionner la ou les enceintes pour utiliser toutes leurs capacités respectives en routine ; et en cas de problème sur l'une des chambres de traitement, la ou les autres chambres peuvent continuer à fonctionner.

Cette solution technique permet une sécurité et une continuité de fonctionnement dans un mode « dégradé », ce qui est temporairement satisfaisant.

Il est aussi possible de prévoir une ou plusieurs enceintes de traitement sur le même site, avec l'une au moins desdites chambres de traitement non utilisée en routine pour servir de chambre(s) de remplacement en cas de problème sur l'une des autres.

D'autres caractéristiques avantageuses, pouvant être prises indépendamment ou en combinaison, sont indiquées ci-dessous :
- les différents étages de traitement de chaque chambre sont chacun adaptés pour la prise en charge d'une famille de molécules à éliminer ;
- chaque chambre comporte 3 ou 4 étages de traitement en série ;
- l'installation comporte un châssis pour le support de l'enceinte avec son axe longitudinal positionné à l'horizontale, et les chambres de traitement sont séparées par une cloison séparative longitudinale, destinée à s'étendre verticalement ;
- les chambres de traitement comportent chacune - une ouverture amont, pour l'entrée de l'effluent gazeux à traiter et - une ouverture aval, pour la sortie de l'effluent gazeux traité ;
- les moyens de traitement équipant chacune des chambres de traitement comportent des étages de traitement en phase liquide qui comprennent des moyens pour l'application d'un liquide de traitement dans leurs chambres respectives et des moyens collecteurs, pour la collecte du liquide de traitement projeté dans leurs chambres respectives ; dans ce cadre, les chambres de traitement sont séparées par une cloison séparative longitudinale s'étendant au sein des moyens collecteurs en vue de son immersion dans le liquide de traitement ; selon le cas, de préférence, les moyens collecteurs de deux étages de traitement en phase liquide parallèles communiquent au travers d'une lumière de la cloison séparative, pour le passage du liquide de traitement de part et d'autre de ladite cloison séparative, ou les moyens collecteurs de deux étages de traitement en phase liquide parallèles sont séparés par la cloison séparative, pour prévenir le passage de liquide de traitement de part et d'autre de ladite cloison séparative ; toujours dans ce cadre, les étages de traitement en phase liquide équipant les chambres de traitement comportent encore avantageusement des moyens pour la recirculation du liquide de traitement depuis les moyens collecteurs jusqu'aux moyens d'application.

### DESCRIPTION DETAILLEE D'UN EXEMPLE DE REALISATION

La présente invention sera encore illustrée, sans être aucunement limitée par la description suivante d'une forme de réalisation particulière, donnée uniquement à titre d'exemple et représentée sur les dessins annexés dans lesquels :
- la figure 1 est une vue générale et en perspective de l'enceinte d'une installation de traitement conforme à l'invention, dont la paroi périphérique est représentée en transparence de manière à accéder visuellement aux moyens de traitement de l'effluent gazeux ;
- la figure 2 est une coupe horizontale schématique d'une partie de l'installation selon l'invention, illustrant les deux chambres de traitement de l'enceinte, agencées en parallèle et dans chacune desquelles une partie de l'effluent gazeux est destinée à cheminer ;
- la figure 3 est une représentation schématique de l'enceinte selon les figures 1 et 2, avec un plan de coupe vertical passant par deux étages de traitement « en phase liquide » parallèles ;
- la figure 4 est une représentation schématique d'une variante de l'enceinte selon les figures 1 à 3, avec un plan de coupe vertical passant par deux étages de traitement « en phase liquide » parallèles.

L'installation de traitement 1 selon l'invention est destinée au traitement d'effluents gazeux.

Par « effluent gazeux », on entend en particulier un gaz généré par une activité industrielle.

Cet effluent gazeux est une source de pollution, notamment de pollution olfactive.

Un cocktail de molécules, présent dans l'effluent, est à l'origine de cette pollution. Ces molécules doivent être éliminées le plus efficacement possible avant la libération de l'effluent dans l'environnement.

Par « traitement » de l'effluent gazeux, on entend en particulier un processus de dépollution de cet effluent.

Cette dépollution s'effectue avantageusement par une élimination des molécules à l'origine de la pollution, par exemple par des phénomènes d'absorption et/ou d'adsorption.

Cette installation de traitement 1 est par exemple destinée à équiper un site industriel émetteur de tels effluents gazeux, tel qu'un site de compostage, une station d'épuration, un site de traitement d'ordures ménagères ou un site d'équarrissage.

Dans la présente description, les termes « amont » et « aval » sont employés tenant compte du sens de cheminement de l'effluent gazeux au sein de l'installation de traitement 1.

Tenant compte de cette convention, en amont, l'installation de traitement 1 comprend des moyens pour la collecte des effluents gazeux à traiter (non représentés).

Par exemple, ces moyens de collecte consistent en des gaines d'aspiration d'air d'ambiance ou d'air de processus industriel.

En aval de ces moyens de collecte, l'installation de traitement 1 comprend une enceinte 2 pour le traitement de l'effluent gazeux collecté.

Selon une variante non représentée, l'installation de traitement 1 peut encore comporter plusieurs enceintes de traitement 2 qui sont implantées en parallèle (par exemple 2 ou 3).

L'enceinte de traitement 2 est constituée d'un ensemble de pièces qui est avantageusement réalisé en matière plastique, par exemple polypropylène ou polyéthylène.

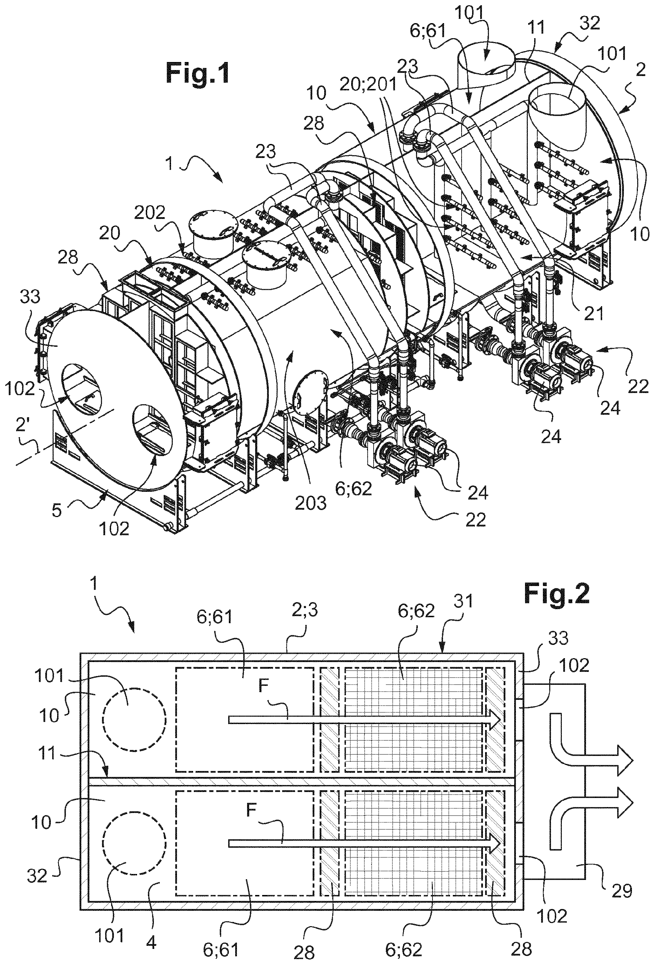

L'enceinte de traitement 2 comporte une paroi périphérique 3 qui délimite un volume interne 4 dans lequel l'effluent gazeux est destiné à cheminer en vue de son traitement. Le flux de l'effluent gazeux est illustré par les flèches F sur la figure 2.

Cette enceinte 2, et sa paroi périphérique 3, ont ici une forme générale d'un fût cylindrique allongé, définissant un axe longitudinal 2'. Le volume interne 4 a ainsi également une forme générale cylindrique allongée.

L'enceinte 2 repose ici à l'horizontale, sur un châssis 5 adapté à cet effet (figure 1). L'axe longitudinal 2' de l'enceinte 2 est ainsi également horizontal.

La paroi périphérique 3 se compose d'une cloison cylindrique tubulaire 31 qui est terminée par deux cloisons d'extrémités, l'une amont 32 et l'autre aval 33 (figure 2).

Le volume interne 4 contient des moyens 6 pour le traitement, en particulier la dépollution, de l'effluent gazeux lors de sa circulation. Ces moyens de traitement 6 sont décrits plus en détails ci-après en relation avec les figures 1 à 3.

Selon l'invention, le volume interne 4 de l'enceinte 2 est ici divisé en plusieurs chambres de traitement 10 qui sont chacune adaptées à traiter une partie de l'effluent gazeux.

En l'occurrence, le volume interne 4 de l'enceinte 2 est ici divisé en deux chambres de traitement 10 identiques ou quasi-identiques qui sont séparées et indépendantes ou pratiquement indépendantes l'une de l'autre, de sorte que, en fonctionnement, il n'y ait pas d'échanges gazeux entre ces dernières.

Les deux chambres de traitement 10 sont agencées en parallèle l'une de l'autre, de part et d'autre d'une cloison séparative longitudinale 11.

Chaque chambre longitudinale 10 comporte un axe longitudinal qui s'étend parallèlement à l'axe longitudinal 2' de l'enceinte 2.

Dans chaque chambre longitudinale 10, le flux de l'effluent gazeux est parallèle, ou approximativement parallèle, à l'axe longitudinal de cette chambre longitudinale 10 (illustré par les flèches F sur la figure 2).

Ces chambres de traitement 10 sont ici séparées l'une de l'autre par l'intermédiaire de cette cloison séparative longitudinale 11.

La cloison séparative longitudinale 11 s'étend dans le volume interne 4, entre les deux cloisons d'extrémités 32, 33.

Elle s'étend de manière diamétrale au niveau de l'axe longitudinal 2' de l'enceinte 2 ; elle est ici verticale, ou au moins approximativement verticale. Cette cloison 11 peut être réalisée en matière plastique, par exemple polypropylène ou polyéthylène. Ses deux extrémités sont solidarisées avec la face interne de l'enceinte 2 par soudure ; on comprend qu'elle participe alors à la rigidité et à la résistance de la structure de l'enceinte 2.

Chaque chambre de traitement 10 a ainsi une forme générale de demi-cylindre, délimitée par la cloison séparative longitudinale 11, par une moitié des deux cloisons d'extrémités 32, 33 et par une moitié de la cloison cylindrique tubulaire 31.

Chaque chambre 10 comporte deux ouvertures :
- une ouverture amont 101, pour l'entrée de l'effluent gazeux à traiter, ménagée dans la cloison longitudinale cylindrique tubulaire 31 et à proximité de la cloison d'extrémité amont 32, et
- une ouverture aval 102, pour la sortie de l'effluent gazeux traité, ménagée dans la cloison d'extrémité aval 33.

Les deux ouvertures amont 101, d'une part, et les deux ouvertures aval 102, d'autre part, sont ainsi ménagées de part et d'autre de la cloison séparative longitudinale 11.

Une partie de l'effluent gazeux est ainsi destinée à cheminer au sein de chacune de ces deux chambres de traitement 10, depuis son ouverture amont 101 jusqu'à son ouverture aval 102.

De préférence, une part égale de l'effluent gazeux à traiter chemine au sein de chacune des chambres de traitement 10.

Pour une meilleure efficacité de traitement, il est préférable de traiter chaque famille de polluant chimique de l'effluent gazeux par un étage de traitement spécialisé.

Dans ce contexte, tel que représenté sur la figure 2, chaque chambre 10 comporte avantageusement des moyens de traitement 6 constitués par différents étages qui sont implantés en série et qui sont chacun adaptés pour la prise en charge d'une famille de molécules à éliminer.

Les différents étages sont implantés en série sur la longueur de l'axe longitudinal de chaque chambre 10 et sur la longueur de la cloison séparative longitudinale 11 (formant une file d'étages de traitement).

Ces moyens de traitement 6 sont symétriques de part et d'autre de la cloison séparative 11, définissant ainsi deux files parallèles d'étages de traitement.

L'enceinte 2 comporte donc des paires d'étages qui sont réparties sur la longueur de la cloison séparative 11.

Et dans chacune desdites paires, les deux étages sont identiques l'un par rapport à l'autre, de part et d'autre de la cloison séparative 11.

Par « identiques », on entend en particulier que les deux étages d'une paire comprennent les mêmes moyens de traitement qui sont adaptés pour la prise en charge d'une même famille de molécules à éliminer.

Les deux étages de chaque paire sont ainsi séparés par la cloison séparative 11.

Cette approche permet une circulation de la partie d'effluent gazeux au sein de chacun de ces étages de traitement successifs, pour le traitement des différentes molécules à éliminer.

Cette approche permet également un agencement optimal des différents étages de traitement, avec notamment des gains d'encombrement, de flexibilité, de coût de revient et de moyens de traitement.

Il est ainsi possible d'avoir deux files parallèles qui comportent chacune plusieurs étages en série (avantageusement jusqu'à 3 ou 4), avec de préférence une perte de charge faible.

En particulier, chaque chambre de traitement 10 comporte des étages de traitement 6 dits « en phase liquide », c'est-à-dire fonctionnant par l'application d'un liquide de traitement au sein de l'effluent gazeux à traiter.

Par « application » du liquide de traitement, on entend en particulier :
- une pulvérisation de ce liquide de traitement dans le flux d'effluent gazeux, ou
- une dépose ou distribution de ce liquide de traitement sur un garnissage.

Un garnissage est classique en soi. Il consiste en un support définissant une pluralité de passage pour l'effluant gazeux ; le liquide de traitement ruissèle par gravité dans ce support, pour optimiser les temps de contact entre l'effluent gazeux et le liquide de traitement.

Uniquement à titre d'exemple, en relation avec les figures 1 et 2, ces étages de traitement 6 du type « en phase liquide » peuvent consister en, tenant compte du sens de cheminement, - un étage de dépoussiérage 61 puis - un étage de traitement acide 62.

L'étage de dépoussiérage 61 est prévu pour retenir les matières aéroportées telles que les farinettes, les poussières ou les résidus de déchets.

Cet étage de dépoussiérage 61 consiste par exemple à mettre en oeuvre un lavage à l'eau, sans correcteur de pH.

Un tel lavage s'effectue avantageusement par pulvérisation simple.

L'étage de traitement acide 62 vise quant à lui à rabattre les molécules azotées, amines mais essentiellement ammoniac.

Cet étage de traitement acide 62 met pour cela en oeuvre un lavage acide (par exemple acide sulfurique) sur garnissage (ou de manière alternative à pulvérisation simple) avec correcteur de pH.

L'étage de traitement acide 62 constitue la variable d'ajustement pour l'azote.

D'autres étages de traitement 6 « en phase liquide » sont envisageables au sein de l'enceinte 2, en remplacement ou en supplément des étages précités.

Par exemple, un étage de traitement basique ou oxydo-basique vise à abattre les molécules soufrées, mercaptans et hydrogènes sulfurés, ce qui permet un soulagement de la charge arrivant sur le biofiltre décrit ci-dessous.

Cet étage de traitement basique utilise pour cela une solution alcaline du type basique (soude par exemple) ou oxydo-basique (eau de javel par exemple), appliquée par une pulvérisation simple ou sur garnissage, avec correcteur de pH et de redox.

Cet étage de traitement basique constitue la variable d'ajustement pour le souffre.

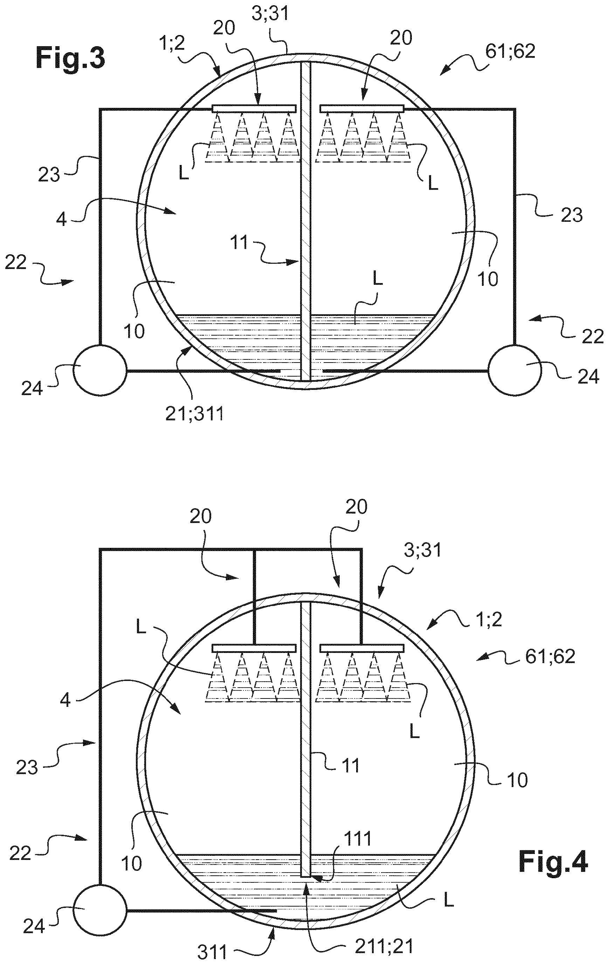

La structure de ces différents étages de traitement « en phase liquide » 61, 62 est illustrée sur la figure 1 et par l'un des étages représentés en coupe sur la figure 3.

Chaque étage de traitement « en phase liquide » 61, 62 comprend :
- des moyens 20 pour l'application du liquide de traitement L au sein de l'étage 61, 62 correspondant, par exemple par projection ou sur garnissage,
- des moyens 21 pour collecter le liquide de traitement L appliqué au sein de cet étage 61, 62, et
- des moyens 22 pour la recirculation du liquide de traitement L depuis les moyens de collecte 21 jusqu'aux moyens d'application 20 associés.

Les moyens d'application 20 consistent par exemple en une pluralité de rampes de pulvérisation horizontales 201 qui sont munies chacune de buses de pulvérisation (par exemple à cône creux à jets radiaux) (figure 1, pour l'étage de traitement amont 61).

Ces moyens d'application 20 peuvent également consister en plusieurs rampes de distribution 202 qui sont directement sus-jacentes d'un garnissage 203 (figure 1, pour l'étage de traitement aval 62).

Les moyens collecteurs 21 sont ici constitués directement par une portion cylindrique inférieure 311 de la cloison cylindrique tubulaire 31 de l'enceinte 2, divisée par la cloison séparative 11.

Les moyens de recirculation 22 comportent une conduite 23 s'étendant au sein des moyens collecteurs 21 et remontant jusqu'aux moyens d'application 20.

Chaque conduite 23 est équipée d'une pompe 24 pour assurer cette recirculation (par exemple une pompe centrifuge horizontale). Les différentes pompes 24 sont placées au pied de l'enceinte 2.

En pratique, ces pompes 24 sont en liaison avec le fond des moyens collecteurs 21 par un tuyau gravitaire, et dont le renflouement de pompe est placé sur le réseau alimentant les rampes de pulvérisation 20.

Ces étages de traitement « en phase liquide » 61, 62 ont l'intérêt notamment de permettre un allongement du temps de contact.

A la suite de chaque étage de traitement « en phase liquide» 61, 62, il est implanté un dispositif dévésiculeur 28 qui est destiné à être traversé par l'effluent gazeux sortant de cet étage de traitement.

Un tel dispositif dévésiculeur 28, classique en soi, par exemple un ensemble de chicanes, est destiné à retenir les gouttelettes de liquide qui seraient entraînées dans le ou les étages de traitement situés en aval.

De manière alternative, tel que représenté sur la figure 4, les moyens collecteurs 21 de deux étages identiques, situés de part et d'autre de la cloison séparative 11, communiquent ici au travers d'une lumière 211.

Cette lumière 211 est délimitée par une bordure inférieure 111 de la cloison séparative 11 qui est située à distance de la portion cylindrique inférieure 311 de la cloison cylindrique tubulaire 31 de l'enceinte 2 tout en restant au sein des moyens collecteurs 21.

Cette bordure inférieure 111 de la cloison séparative 11 est par conséquent, en fonctionnement, destinée à être immergée dans le liquide de traitement L présent au sein des moyens collecteurs 21.

Cette structure permet le passage du liquide de traitement entre deux étages identiques des deux chambres de traitement 10, de part et d'autre de cette cloison séparative 11.

Cette structure permet aussi d'équiper l'enceinte de traitement 2 avec des moyens de recirculation 22 (en l'occurrence une pompe 24 unique et un même réseau de conduite 23) qui sont communs aux moyens d'application 20 équipant deux étages parallèles (figure 4).

Par ailleurs, le flux d'effluent gazeux amont/aval, dans chacune des deux chambres de traitement 10, est avantageusement obtenu par l'intermédiaire de ventilateurs 29 (figure 2).

Ces ventilateurs 29 sont ici placés en aval, raccordés avec les ouvertures aval 102 de ces deux chambres de traitement 10.

Il peut être prévu un unique ventilateur 29 pour les deux chambres de traitement 10 ; il peut également être prévu deux ventilateurs 29 qui sont raccordés chacun à l'une des deux chambres de traitement 10.

Le flux d'effluent gazeux amont/aval est ainsi généré par un phénomène de dépression.

En aval de l'enceinte 2, l'installation de traitement 1 peut encore comprendre avantageusement un étage de traitement dit « sec », en particulier un étage biofiltre et/ou un étage de charbon actif (non représentés).

L'étage biofiltre est l'étage final en aval, constituant la principale étape de traitement pour les molécules soufrées. Il vise à transformer de manière irréversible les molécules soufrées, sans produire d'effluent aqueux.

Cet étage biofiltre intègre une masse filtrante répartie en deux à quatre biofiltres identiques et distincts.

La masse filtrante est constituée d'un mélange homogène de coupes de bois frais et/ou de tourbe blonde et/ou de bourre de cacao et/ou d'écorces de pins.

Cette masse filtrante est supportée par un caillebotis, par exemple un polyester armé de fibres de verre, sur lequel est posée une sous-couche d'écorce ou de bois de racines déchiquetées.

Encore en aval, l'installation de traitement 1 comprend des moyens pour l'évacuation des effluents gazeux traités (non représentés).

Cette installation de traitement 1 est encore avantageusement associée à différents moyens assurant son fonctionnement, notamment une armoire électrique de puissance, un automate, des régulateurs autonomes et un réseau hydraulique.

De manière générale, cette installation a l'intérêt d'être particulièrement compacte, et de structure simple, facile à fabriquer.

Une telle enceinte de traitement est plus simple sur le plan des opérations routinières de surveillance et de maintenance : tous les équipements sont accessibles et visitables en quelques minutes depuis le sol ou depuis une plateforme munie d'un escalier.

Selon une variante non représentée, l'enceinte 2 et le châssis 5 peuvent être structurés de sorte que cette enceinte 2 soit agencée avec son axe longitudinal 2' positionné à la verticale.

Dans ce cas, la cloison séparative 11 s'étend également diamétralement, pour définir les deux chambres de traitement 10 indépendantes.

De manière générale, l'installation selon l'invention apporte un gain d'espace notable, une optimisation énergétique, une excellente efficacité de traitement en fiabilisant le fonctionnement, une fiabilité des circuits hydrauliques, et une économie d'énergie.

Une telle installation est ainsi particulièrement intéressante, en ce qu'elle permet une sécurisation et une continuité des traitements des effluents gazeux, tout en apportant un compromis intéressant sur le plan du coût de revient et de l'encombrement.

De plus, l'installation selon l'invention peut traiter des volumes importants d'air vicié, par exemple de 30 000 à 120 000 m³/h en fonction de son diamètre.

L'installation selon l'invention a également pour intérêt de présenter une maintenance aisée, car un opérateur peut pénétrer dans les chambres pour les inspecter ou les nettoyer.

L'installation selon l'invention permet également d'avoir, sur deux files en parallèle, plusieurs étages de traitement en série (par exemple de 3 à 4) avec une très faible perte de charge.

## Revendications

1. Installation (1) pour le traitement d'un effluent gazeux généré par une activité industrielle, laquelle installation (1) comprend :
(i) au moins une enceinte (2) délimitant un volume interne (4) comportant - des moyens (6) pour le traitement dudit effluent gazeux, lors de sa circulation au sein dudit volume interne (4), - au moins une ouverture amont (101), pour l'entrée de l'effluent gazeux à traiter, et - au moins une ouverture aval (102), pour la sortie de l'effluent gazeux traité, et
(ii) des moyens (29) pour générer une circulation dudit effluent gazeux, depuis ladite ouverture amont (101) jusqu'à ladite ouverture aval (102) dudit volume interne (4),
laquelle enceinte (2) a une forme générale de fût cylindrique présentant un axe longitudinal (2'),
lesquels moyens de traitement (6) sont composés d'étages de traitement (61, 62) qui sont implantés en série, pour permettre une circulation de la partie d'effluent gazeux successivement au sein de chacun desdits étages de traitement (61, 62), lesquels étages de traitement (61, 62) comportent chacun des moyens (20) pour appliquer un traitement particulier à ladite partie d'effluent gazeux,
**caractérisée en ce que** ledit volume interne (4) de ladite enceinte (2) comprend deux chambres de traitement (10) identiques l'une par rapport à l'autre,
**en ce que** les chambres de traitement (10) sont séparées par une cloison séparative longitudinale (11) qui s'étend diamétralement et verticalement le long dudit axe longitudinal (2'),
laquelle enceinte de traitement (2) comporte une paroi périphérique (3) qui délimite un volume interne (4),
laquelle paroi périphérique (3) se compose d'une cloison cylindrique tubulaire (31) qui est terminée par deux cloisons d'extrémités, l'une amont (32) et l'autre aval (33),
**en ce que** chaque chambre de traitement (10) a une forme générale de demi-cylindre, délimitée par la cloison séparative (11), par une moitié des deux cloisons d'extrémités (32, 33) et par une moitié de la cloison cylindrique tubulaire (31),
**en ce que** les deux chambres de traitement (10) sont agencées en parallèle l'une de l'autre, de part et d'autre de la cloison séparative longitudinale (11),
**en ce que** lesdites deux chambres de traitement (10) sont équipées chacune desdits moyens de traitement (6), qui sont agencées en parallèle et dans chacune desquelles une partie dudit effluent gazeux est destinée à cheminer pour son traitement,
**en ce que** chaque chambre de traitement (10) comprend des moyens de traitement (6) composés d'étages de traitement (61, 62) qui sont implantés en série sur la longueur de l'axe longitudinal de ladite chambre de traitement (10) et sur la longueur de la cloison séparative longitudinale (11),
**en ce que** l'enceinte (2) comporte au moins deux paires d'étages de traitement (61, 62) qui sont réparties en série sur la longueur de la cloison séparative (11), et
**en ce que**, dans chacune desdites paires d'étages de traitement (61, 62), les deux étages de traitement (61, 62) sont identiques l'un par rapport à l'autre, sont disposés de part et d'autre de la cloison séparative (11) et sont séparés par ladite cloison séparative (11).

2. Installation pour le traitement d'un effluent gazeux, selon la revendication 1, **caractérisée en ce que** les différents étages de traitement (61, 62) de chaque chambre (10) sont chacun adaptés pour la prise en charge d'une famille de molécules à éliminer.

3. Installation pour le traitement d'un effluent gazeux, selon l'une quelconque des revendications 1 ou 2, **caractérisée en ce que** chaque chambre (10) comporte 3 ou 4 étages de traitement (61, 62) en série.

4. Installation pour le traitement d'un effluent gazeux, selon l'une quelconque des revendications 1 à 3, **caractérisée en ce qu'**elle comporte un châssis (5) pour le support de l'enceinte (2) avec son axe longitudinal (2') positionné à l'horizontale, et **en ce que** les chambres de traitement (10) sont séparées par une cloison séparative longitudinale (11), destinée à s'étendre verticalement.

5. Installation pour le traitement d'un effluent gazeux, selon l'une quelconque des revendications 1 à 4, **caractérisée en ce que** les chambres de traitement (10) comportent chacune - une ouverture amont (101), pour l'entrée de l'effluent gazeux à traiter et - une ouverture aval (102), pour la sortie de l'effluent gazeux traité.

6. Installation pour le traitement d'un effluent gazeux, selon l'une quelconque des revendications 1 à 5, **caractérisée en ce que** les moyens de traitement (6) équipant chacune des chambres de traitement (10) comportent des étages de traitement en phase liquide (61, 62) qui comprennent - des moyens (20) pour l'application d'un liquide de traitement dans leurs chambres (10) respectives et - des moyens collecteurs (21), pour la collecte du liquide de traitement projeté dans leurs chambres (10) respectives.

7. Installation pour le traitement d'un effluent gazeux, selon la revendication 6, **caractérisée en ce que** les chambres de traitement (10) sont séparées par une cloison séparative longitudinale (11) s'étendant au sein des moyens collecteurs (21) en vue de son immersion dans le liquide de traitement.

8. Installation pour le traitement d'un effluent gazeux, selon la revendication 7, **caractérisée en ce que** :
- les moyens collecteurs (21) de deux étages de traitement en phase liquide (61, 62) parallèles communiquent au travers d'une lumière (211) de la cloison séparative (11), pour le passage du liquide de traitement de part et d'autre de ladite cloison séparative (11), ou
- les moyens collecteurs (21) de deux étages de traitement en phase liquide (61, 62) parallèles sont séparés par la cloison séparative (11), pour prévenir le passage de liquide de traitement de part et d'autre de ladite cloison séparative (11).

9. Installation pour le traitement d'un effluent gazeux, selon l'une quelconque des revendications 6 à 8, **caractérisée en ce que** les étages de traitement en phase liquide (61, 62) équipant les chambres de traitement (10) comportent encore des moyens (22) pour la recirculation du liquide de traitement depuis les moyens collecteurs (21) jusqu'aux moyens d'application (20).

## Patentansprüche

1. Anlage (1) zur Aufbereitung eines durch eine industrielle Tätigkeit erzeugten Abgases, wobei die Anlage (1)
(i) wenigstens ein Gehäuse (2), das ein inneres Volumen (4) begrenzt und - Mittel (6) zur Behandlung des Abgases bei dessen Fluß im inneren Volumen (4), - wenigstens eine stromaufwärts gelegene Öffnung (101) für den Eintritt des zu behandelnden Abgases und - wenigstens eine stromabwärts gelegene Öffnung (102) für den Austritt des Abgases aufweist, und
(ii) Mittel (29) zum Erzeugen eines Flusses des Abgases von der stromaufwärts gelegenen Öffnung (101) bis zur stromabwärts gelegenen Öffnung (102) des inneren Volumens (4) aufweist,
wobei das Gehäuse (2) die allgemeine Form eines zylindrischen Fasses mit einer Längsachse (2') hat,
wobei die Mittel zur Behandlung (6) aus Behandlungsstufen (61, 62) bestehen, die in Reihe angeordnet sind, um ein Fließen des Abgasteils nacheinander in jeder der Behandlungsstufen (61, 62) zu ermöglichen, wobei die Behandlungsstufen jeweils Mittel (20) zum Anwenden einer speziellen Behandlung bei dem Abgasteil aufweisen,
**dadurch gekennzeichnet,**
**daß** das innere Volumen (4) des Gehäuses (2) zwei miteinander identische Behandlungskammern (10) aufweist,
**daß** die Behandlungskammern (10) durch eine längs gerichtete Trennwand (11) getrennt sind, die sich diametral und senkrecht entlang der Längsachse (2') erstreckt,
wobei das Behandlungsgehäuse (2) eine Umfangswand (3) aufweist, die ein inneres Volumen (4) begrenzt,
wobei sich die Umfangswand (3) aus einer rohrförmigen zylindrischen Wandung (31) zusammensetzt, die durch zwei Endwandungen, eine stromaufwärtige (32) und eine stromabwärtige (33), abgeschlossen ist,
**daß** jede Behandlungskammer (10) eine im Wesentlichen halbzylindrische Form hat, die durch die Trennwand (11), durch eine Hälfte der beiden Endwandungen (32, 33) und durch eine Hälfte der rohrförmigen zylindrischen Wandung (31) begrenzt ist,
**daß** die beiden Behandlungskammern (10) zueinander parallel und beiderseits der längs gerichteten Trennwand (11) angeordnet sind,
**daß** die beiden Behandlungskammern (10) jeweils mit den Behandlungsmitteln (6) ausgestattet sind, daß sie zueinander parallel angeordnet sind und in deren jeder ein Teil des Abgases für seine Behandlung fließen soll,
**daß** jede Behandlungskammer (10) Behandlungsmittel (6) aufweist, die sich aus Behandlungsstufen (61, 62) zusammensetzen, die in Reihe und über die Länge der Längsachse der Behandlungskammer (10) und über die Länge der längs gerichteten Trennwand (11) eingesetzt sind,
**daß** das Gehäuse (2) wenigstens zwei Paar Behandlungsstufen (61, 62) aufweist, die in Reihe über die Länge der Trennwand (11) verteilt sind, und
**daß** in jedem der Paare Behandlungsstufen (61, 62) die beiden Behandlungsstufen (61, 62) miteinander identisch sind, beiderseits der Trennwand (11) angeordnet sind und durch die Trennwand (11) getrennt sind.

2. Anlage zur Aufbereitung eines Abgases gemäß Anspruch 1, **dadurch gekennzeichnet, daß** die verschiedenen Behandlungsstufen (61, 62) jeder Kammer (10) jeweils für die Aufnahme einer zu auszuscheidenden Molekülfamilie ausgelegt sind.

3. Anlage zur Aufbereitung eines Abgases gemäß einem der Ansprüche 1 oder 2, **dadurch gekennzeichnet, daß** jede Kammer (10) drei oder vier in Reihe angeordnete Behandlungsstufen (61, 62) aufweist.

4. Anlage zur Aufbereitung eines Abgases gemäß einem der Ansprüche 1 bis 3, **dadurch gekennzeichnet, daß** sie ein Gestell (5) zum Tragen des Gehäuses (2) mit horizontal angeordneter Längsachse (2') aufweist, und daß die Behandlungskammern (10) durch eine längs gerichtete Trennwand (11) getrennt sind, die dazu bestimmt ist, sich senkrecht zu erstrecken.

5. Anlage zur Aufbereitung eines Abgases gemäß einem der Ansprüche 1 bis 4, **dadurch gekennzeichnet, daß** die Behandlungskammern (10) jeweils - eine stromaufwärtige Öffnung (101) für den Eintritt des zu behandelnden Abgases und - eine stromabwärtige Öffnung (102) für den Austritt des behandelten Abgases aufweisen.

6. Anlage zur Aufbereitung eines Abgases gemäß einem der Ansprüche 1 bis 5, **dadurch gekennzeichnet, daß** die Behandlungsmittel (6), mit denen jede der Behandlungskammern (10) ausgestattet ist, Stufen (61, 62) für die Behandlung in der Flüssigphase aufweisen, die - Mittel (20) zum Anwenden einer Behandlungsflüssigkeit in deren jeweiligen Kammern (10) und - Mittel (21) zum Sammeln der in deren jeweilige Kammern (10) eingespritzten Behandlungsflüssigkeit aufweisen.

7. Anlage zur Aufbereitung eines Abgases gemäß Anspruch 6, **dadurch gekennzeichnet, daß** die Behandlungskammern (10) durch eine längs gerichtete Trennwand (11) getrennt sind, die sich in den Sammelmitteln (21) erstreckt, um in die Behandlungsflüssigkeit eingetaucht zu werden.

8. Anlage zur Aufbereitung eines Abgases gemäß Anspruch 7, **dadurch gekennzeichnet, daß**
- die Sammelmittel (21) zweier paralleler Stufen (61, 62) zum Behandeln in der Flüssigphase durch eine Öffnung (211) in der Trennwand (11) miteinander kommunizieren, damit die Behandlungsflüssigkeit auf beide Seiten der Trennwand (11) gelangt, oder
- die Sammelmittel (21) zweier paralleler Stufen (61, 62) zum Behandeln in der Flüssigphase durch die Trennwand (11) getrennt sind, um zu verhindern, daß die Behandlungsflüssigkeit auf beide Seiten der Trennwand (11) gelangt.

9. Anlage zur Aufbereitung eines Abgases gemäß einem der Ansprüche 6 bis 8, **dadurch gekennzeichnet, daß** die Stufen (61, 62) für die Behandlung in der Flüssigphase, mit denen die Behandlungskammern (10) ausgestattet sind, außerdem Mittel (22) zum Umwälzen der Behandlungsflüssigkeit von den Sammelmitteln (21) zu den Anwendungsmitteln (22) aufweisen.

## Claims

1. A facility (1) for treating a gaseous effluent generated by an industrial activity, wherein said facility (1) comprises:
(i) at least one enclosure (2) delimiting an inner volume (4) including - means (6) for treating said gaseous effluent, during the circulation thereof within said inner volume (4), - at least one upstream opening (101), for the entry of the gaseous effluent to be treated, and - at least one downstream opening (102), for the exit of the treated gaseous effluent, and
(ii) means (29) for generating a circulation of said gaseous effluent, from said upstream opening (101) to said downstream opening (102) of said inner volume (4),
wherein said enclosure (2) has a generally cylindrical barrel shape having a longitudinal axis (2'),
wherein said treatment means (6) are composed of treatment stages (61, 62) that are implanted in series, to allow a circulation of the part of gaseous effluent successively within each of said treatment stages (61, 62), wherein said treatment stages (61, 62) each include means (20) for applying a particular treatment to said part of gaseous effluent,
**characterized in that** said inner volume (4) of said enclosure (2) comprises two treatment chambers (10) identical to each other,
**in that** the treatment chambers (10) are separated by a longitudinal separation partition (11) that extends diametrically and vertically along said longitudinal axis (2'),
wherein said treatment enclosure (2) includes a peripheral wall (3) that delimits an inner volume (4),
wherein said peripheral wall (3) is composed of a tubular cylindrical partition (31) that is ended by two end partitions, an upstream one (32) and a downstream one (33),
**in that** each treatment chamber (10) has a generally semicylindrical shape, delimited by the separation partition (11), by a half of the two end partitions (32, 33) and by a half of the tubular cylindrical partition (31),
**in that** the two treatment chambers (10) are arranged parallel to each other, on either side of the longitudinal separation partition (11),
**in that** said two treatment chambers (10) are each equipped with said treatment means (6), which are arranged parallel to each other and in each of which a part of said gaseous effluent is intended to travel to be treated,
**in that** each treatment chamber (10) comprises treatment means (6) composed of treatment stages (61, 62) that are implanted in series over the length of the longitudinal axis of said treatment chamber (10) and over the length of the longitudinal separation partition (11),
**in that** the enclosure (2) includes at least two pairs of treatment stages (61, 62) that are distributed in series over the length of the separation partition (11), and
**in that**, in each of said pairs of treatment stages (61, 62), the two treatment stages (61, 62) are identical to each other, are arranged on either side of the separation partition (11) and are separated by said separation partition (11).

2. The facility for treating a gaseous effluent according to claim 1, **characterized in that** the different treatment stages (61, 62) of each chamber (10) are each adapted for handling a family of molecules to be eliminated.

3. The facility for treating a gaseous effluent according to any one of claims 1 or 2, **characterized in that** each chamber (10) includes 3 or 4 treatment stages (61, 62) in series.

4. The facility for treating a gaseous effluent according to any one of claims 1 to 3, **characterized in that** it includes a frame (5) for supporting the enclosure (2) with its longitudinal axis (2') positioned horizontally, and **in that** the treatment chambers (10) are separated by a longitudinal separation partition (11), intended to extend vertically.

5. The facility for treating a gaseous effluent according to any one of claims 1 to 4, **characterized in that** the treatment chambers (10) each include - an upstream opening (101), for the entry of the gaseous effluent to be treated, and - a downstream opening (102), for the exit of the treated gaseous effluent.

6. The facility for treating a gaseous effluent according to any one of claims 1 to 5, **characterized in that** the treatment means (6) equipping each of the treatment chambers (10) include liquid-phase treatment stages (61, 62) that include - means (20) for applying a treatment liquid in their respective chambers (10) and - collecting means (21) for collecting the treatment liquid sprayed in their respective chambers (10).

7. The facility for treating a gaseous effluent according to claim 6, **characterized in that** the treatment chambers (10) are separated by a longitudinal separation partition (11) extending within the collecting means (21) to be fully immersed in the treatment liquid.

8. The facility for treating a gaseous effluent according to claim 7, **characterized in that**:
- the collecting means (21) of two parallel liquid-phase treatment stages (61, 62) communicate through an aperture (211) in the separation partition (11), for the passage of the treatment liquid on either side of said separation partition (11), or
- the collecting means (21) of two parallel liquid-phase treatment stages (61, 62) are separated by the separation partition (11), to prevent the passage of the treatment liquid on either side of said separation partition (11).

9. The facility for treating a gaseous effluent according to any one of claims 6 to 8, **characterized in that** the liquid-phase treatment stages (61, 62) equipping the treatment chambers (10) also include means (22) for recirculating the treatment liquid from the collecting means (21) to the application means (20).
